# EUROPÄISCHE PATENTSCHRIFT

(11) **EP 3 887 693 B1**
(45) Veröffentlichungstag und Bekanntmachung des Hinweises auf die Patenterteilung: **29.04.2026**
(21) Anmeldenummer: 19794520.7
(22) Anmeldetag: 24.10.2019
(51) Int. Cl.: F16H 57/04

(54) **ÖLDRAINAGE**
OIL DRAINAGE
DRAINAGE D'HUILE

(30) Priorität: 29.11.2018 DE 102018220534
(43) Veröffentlichungstag der Anmeldung: 06.10.2021
(73) Patentinhaber: ZF Friedrichshafen AG, 88046 Friedrichshafen (DE); ZF Wind Power Antwerpen N.V., 3920 Lommel (BE)
(72) Erfinder: DE LAET, Wim, 2000 Antwerpen (BE); ROTTIERS, Stijn, 9160 Lokeren (BE); ADRIAENSEN, Kris, 88046 Friedrichshafen (DE); CORDES, Richard, 88046 Friedrichshafen (DE)
(74) Vertreter: ZF Friedrichshafen AG
(86) Internationale Anmeldenummer: PCT/EP2019/079003
(87) Internationale Veröffentlichungsnummer: WO 2020/108889

(56) Entgegenhaltungen:
- EP-A1- 3 001 070
- WO-A2-2011/080717
- WO-A2-2011/080717
- CN-U- 205 155 382
- CN-U- 205 155 382
- DE-A1- 102009 036 526
- DE-A1- 102009 036 526
- DE-B3- 10 254 551
- DE-B3- 10 254 551
- KR-A- 20150 143 953
- KR-A- 20150 143 953
- KR-B1- 101 714 313
- KR-B1- 101 714 313
- US-A- 6 082 416
- US-A- 6 082 416
- US-A1- 2002 194 952
- US-A1- 2002 194 952
- US-A1- 2008 309 068

## Beschreibung

Die Erfindung betrifft ein Getriebe nach dem Oberbegriff von Anspruch 1.

Windkraftgetriebe bestehen vielfach aus drei Getriebestufen - einer angetriebenen, eingangsseitigen Planetenstufe, einer zwischengeschalteten Planetenstufe, und einer nachtgeschalteten, ausgangsseitigen Stirnradstufe. Da die angetriebene Planetenstufe größer dimensioniert ist als die zwischengeschaltete Planetenstufe, muss der Teil des Gehäuses, der die angetriebene Planetenstufe umgibt, größer dimensioniert sein als der Teil des Gehäuses, der die zwischengeschaltete Planetenstufe umgibt.

Der Pegelstand eines in dem Gehäuse befindlichen Ölsumpfs liegt im Regelbetrieb oberhalb der Unterkante des Gehäuseteils, der die zwischengeschaltete Planetenstufe umgibt. Dadurch erstreckt sich ein gemeinsamer Ölsumpf zwischen allen drei Getriebestufen. Wird aber das Öl aber abgelassen, sinkt der Pegelstand unter die Unterkante des Gehäuseteils, der die zwischengeschaltete Planetenstufe umgibt. Dies führt dazu, dass in dem Gehäuseteil, der die angetriebene Planetenstufe umgibt und in dem Gehäuseteil, der die Stirnradstufe umgibt, voneinander getrennte Ölsümpfe entstehen. Um diese über einen einzigen Ablass entleeren zu können, verläuft am Fuß des Getriebes ein Drainagerohr, das den Gehäuseteil, der die angetriebene Planetenstufe umgibt und den Gehäuseteil, der die Stirnradstufe umgibt, schmierstoffleitend miteinander verbindet.

Um Fertigungstoleranzen und lastbedingte Verformungen des Getriebes auszugleichen, muss das Drainagerohr flexibel sein. Aus dem Stand der Technik sind Lösungen bekannt, die zu diesem Zweck einen flexiblen Rohrabschnitt vorsehen. Derartige Lösungen weisen aber eine Reihe von Nachteilen auf. So sind flexible Rohrabschnitte aufgrund ihrer geringen mechanischen Belastbarkeit anfällig für Defekte und Undichtigkeiten. Insbesondere besteht die Gefahr, dass sich ein flexibler Rohrabschnitt beim Einbau verdreht. Da es sich um selten verwendete Teile handelt, die speziell hergestellt werden müssen, sind die Kosten entsprechend hoch. Im Stand der Technik ist in der EP 2 001 070 A1 ein Getriebe mit zwei ineinander gesteckten Stücken einer Rohrleitung offenbart. Die ineinander gesteckten Stücke sind mit einer Madenschraube ineinander fixiert.

Der Erfindung liegt die Aufgabe zugrunde, ein Drainagerohr verfügbar zu machen, das die den aus dem Stand der Technik bekannten Lösungen innewohnenden Nachteile nicht aufweist. Insbesondere soll das Drainagerohr mechanisch robust, kostengünstig und einfach zu montieren sein.

Diese Aufgabe wird gelöst durch ein Getriebe nach Anspruch 1. Bevorzugte Weiterbildungen sind in den Unteransprüchen enthalten.

Die Anordnung umfasst ein Getriebegehäuse und eine Rohrleitung. Eine Rohrleitung ist eine als Rohr ausgestaltete Leitung. Es handelt sich um eine fluidleitende Verbindung, die aus einem oder mehreren Rohrstücken gebildet wird. Die Rohrleitung ist im vorliegenden Fall flüssigkeitsleitend, insbesondere schmierstoffleitend ausgeführt. Das Getriebegehäuse bildet einen Ölsumpf aus. Der Ölsumpf ist ein wannenförmiger Abschnitt des Getriebegehäuses, der ausgebildet ist, Schmierstoff aufzufangen und bis zur erneuten Einleitung in den Schmierstoffkreislauf zwischen zu speichern.

Ein erstes Stück der Rohrleitung und ein zweites Stück der Rohrleitung münden jeweils in den Ölsumpf. Somit bildet die Rohrleitung eine schmierstoffleitende Verbindung zwischen einer ersten Mündung in den Ölsumpf und einer zweiten Mündung in den Ölsumpf.

Das erste Stück und das zweite Stück bilden jeweils eine Rohrleitung. Erfindungsgemäß sind das erste Stück und das zweite Stück ineinandergesteckt. Das erste Stück wurde mindestens teilweise in das zweite Stück eingeführt, oder das zweite Stück wurde mindestens teilweise in das erste Stück eingeführt. Infolgedessen umgibt mindestens ein Teil des zweiten Stücks mindestens einen Teil des ersten Stücks in Umfangsrichtung bezüglich einer Mittelachse der Rohrleitung.

Im ineinander gesteckten Zustand bilden das erste Stück und das zweite Stück die Rohrleitung der erfindungsgemäßen Anordnung. Entsprechend sind das erste Stück und das zweite Stück fluiddicht gegeneinander abgedichtet.

Dadurch, dass das erste Stück und das zweite Stück ineinandergesteckt sind, lassen sie sich relativ zueinander bewegen. Dies ermöglicht es, Maßabweichungen aufgrund von Fertigungstoleranzen und lastbedingte Verformungen des Getriebegehäuses auszugleichen. Die Steckverbindung zwischen dem ersten Stück und dem zweiten Stück lässt sich geometrisch sehr einfach gestalten. Daher können einfach zu fertigende und robuste Gussteile verwendet werden.

Erfindungsgemäß ist die aus dem inneren Teil und dem äußeren Teil bestehende Steckverbindung zwischen dem ersten Stück und dem zweiten Stück entlang der Mittelachse axial verschiebbar. Dies bedeutet, dass das erste Stück und das zweite Stück entlang der Mittelachse relativ zueinander verschiebbar sind.

Die Mittelachse kennzeichnet den Verlauf der Rohrleitung. Es handelt sich um eine Kurve, die geometrische Schwerpunkte von Querschnittsflächen der Rohrleitung gebildet werden. Jeder geometrische Schwerpunkt einer Querschnittsfläche der Rohrleitung ist Teil der Mittelachse. Schmierstoff, der durch die Rohrleitung fließt, fließt entlang der Mittelachse.

Die erfindungsgemäße Verschiebbarkeit entlang der Mittelachse ist vorteilhaft, da sie einen besonders einfachen Aufbau der Steckverbindung ermöglicht. Dies macht sich eine bevorzugte Weiterbildung zunutze, die mindestens eine Dichtung vorsieht, welche das erste Stück und das zweite Stück fluiddicht gegeneinander abdichtet. Die Dichtung ist unverschiebbar in dem ersten Stück fixiert, etwa in einer von dem ersten Stück ausgebildeten Nut. Das zweite Stück bildet einen zylinderförmigen Abschnitt aus. Auf diesem liegt die Dichtung auf. Umgekehrt kann die Dichtung unverschiebbar in dem zweiten Stück fixiert sein und auf einem zylinderförmigen Abschnitt des ersten Stücks aufliegen. Die Dichtung ist ringförmig. Sie verläuft also um die Mittelachse herum und ist in sich geschlossen. Sie dichtet das erste Stück und das zweite Stück fluiddicht gegeneinander ab. Dadurch, dass sie auf einem der beiden Stücke lediglich aufliegt, ist sie entlang der Mittelachse verschiebbar. Verdrehungen des ersten Stücks und des zweiten Stücks um die Mittelachse herum lässt die Dichtung uneingeschränkt zu. Auch Verkippungen um orthogonal dazu verlaufende Achsen sind in geringem Umfang möglich.

Erfindungsgemäß weist das Getriebegehäuse mindestens zwei Gehäuseteile auf. Diese sind separat ausgeführt, d.h. nicht einstückig miteinander verbunden. Sie sind miteinander gefügt, vorzugsweise lösbar, und kapseln so einen Hohlraum innerhalb des Getriebegehäuses - das Getriebeinnere. In dem Getriebeinneren befinden sich die Zahnräder und Lager des Getriebes. Diese werden über den genannten Schmierstoffkreislauf geschmiert.

Ein erstes der Gehäuseteile weist die erste Mündung der Rohrleitung in den Ölsumpf auf, ein zweites der Gehäuseteile die zweite Mündung der Rohrleitung in den Ölsumpf. Das erste Stück der Rohrleitung mündet also in das erste Gehäuseteil, das zweite Stück in das zweite Gehäuseteil. Dies impliziert, dass die beiden Gehäuseteile jeweils einen Teil des Schmierstoffsumpfs bilden. Die Rohrleitung bildet weiterbildungsgemäß eine schmierstoffleitende Verbindung zwischen dem von dem ersten Gehäuseteil gebildeten Teil des Ölsumpfs und dem von dem zweiten Gehäuseteil gebildeten Teil des Ölsumpfs.

Das erste Stück der Rohrleitung und der erste Gehäuseteil können als separate Teile ausgestaltet oder einstückig miteinander verbunden sein. Ebenso können das zweite Stück der Rohrleitung und der zweite Gehäuseteil als separate Teile ausgestaltet oder einstückig miteinander verbunden sein.

Bevorzugt ist das Getriebegehäuse mit einem dritten Gehäuseteil weitergebildet. Der dritte Gehäuseteil verbindet den ersten Gehäuseteil und den zweiten Gehäuseteil miteinander. Dies impliziert, dass der dritte Gehäuseteil zwischen dem ersten Gehäuseteil und dem zweiten Gehäuseteil angeordnet ist. Der dritte Gehäuseteil ist zur einen Seite hin mit dem ersten Gehäuseteil gefügt und zur anderen Seite hin mit dem zweiten Gehäuseteil. Gemeinsam kapseln der erste Gehäuseteil, der zweite Gehäuseteil und der dritte Gehäuseteil das Gehäuseinnere.

Der erste Gehäuseteil kann etwa eine eingangsseitige Planetenstufe beinhalten, der zweite Gehäuseteil eine ausgangsseitige Stirnradstufe und der dritte Gehäuseteil eine zwischengeschaltete Planetenstufe. Durch eine entsprechende Dimensionierung des dritten Gehäuseteils kann es passieren, dass der von dem ersten Gehäuseteil gebildete Teil des Schmierstoffsumpfs und der von dem zweiten Gehäuseteil gebildete Teil des Schmierstoffsumpfs bei einem geringen Pegelstand des Schmierstoffs nicht mehr über den dritten Gehäuseteil schmierstoffleitend verbunden sind. In diesem Fall dient die Rohrleitung als Bypass, der den ersten Gehäuseteil und den zweiten Gehäuseteil "kurzschließt" und anstelle des dritten Gehäuseteils schmierstoffleitend verbindet.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: eine Ansicht eines Getriebegehäuses von außen; und
- Fig. 2: eine Detailansicht im Längsschnitt.

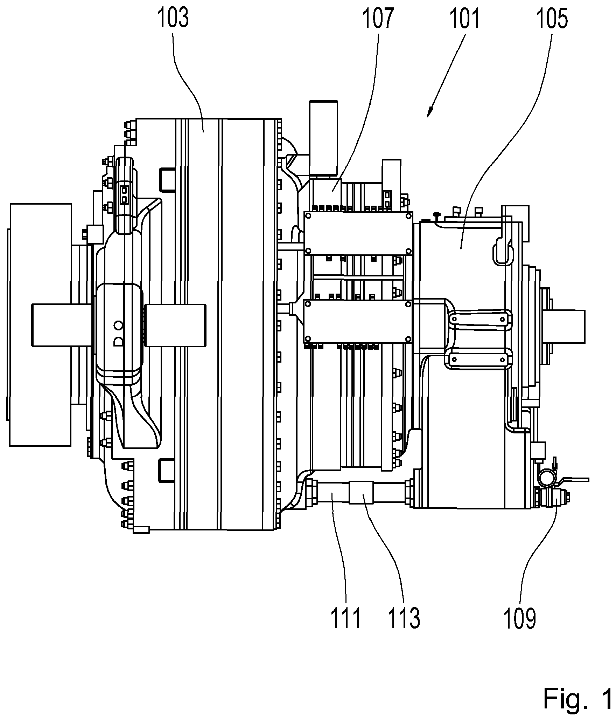

Ein Getriebe 101 gemäß Fig. 1 weist einen ersten Gehäuseteil 103, einen zweiten Gehäuseteil 105 und einen dritten Gehäuseteil 107 auf. Das erste Gehäuseteil 103 und der dritte Gehäuseteil 107 umschließen jeweils eine Planetenstufe. In dem zweiten Gehäuseteil 105 befindet sich eine Stirnradstufe des Getriebes 101.

Der zweite Gehäuseteil 105 weist einen Ablasshahn 109 für Getriebeöl auf. Der Ablasshahn 109 befindet sich an der tiefsten Stelle des Getriebes 101. Er dient dazu, Getriebeöl aus dem Getriebegehäuse 101 abzulassen.

Der dritte Gehäuseteil 107 ist zwischen dem ersten Gehäuseteil 103 und dem zweiten Gehäuseteil 105 angeordnet. Er ist kleiner dimensioniert als der erste Gehäuseteil 103 und der zweite Gehäuseteil 105. Insbesondere überragen der ersten Gehäuseteil 103 und der zweite Gehäuseteil 105 vertikal nach unten hin den dritten Gehäuseteil 107. Ein unterer Abschluss des ersten Gehäuseteils 103 und ein unterer Abschluss des zweiten Gehäuseteils 105 befinden sich also vertikal unterhalb eines unteren Abschlusses des zweiten Gehäuseteils 105.

Fällt ein Pegel eines von dem Getriebegehäuse 101 gebildeten Ölsumpfs unter den unteren Abschluss des zweiten Gehäuseteils 107, besteht über den zweiten Gehäuseteil 107 keine schmierstoffleitende Verbindung mehr zwischen einem von dem ersten Gehäuseteil 103 gebildeten Teil des Ölsumpfs und einem von dem zweiten Gehäuseteil 105 gebildeten Teil des Ölsumpfs. Daher ist eine Rohrleitung 111 vorgesehen, welche diese Teile des Ölsumpfs schmierstoffleitend verbindet.

Die Rohrleitung 111 ist am Fuß des Getriebes 101 bzw. des Getriebegehäuses 103, 105, 107 angeordnet. Sie erstreckt sich zwischen dem ersten Gehäuseteil 103 und dem zweiten Gehäuseteil 105 und überbrückt somit den dritten Gehäuseteil 107. Öl, das sich beim Ablassen des Öls in dem ersten Gehäuseteil 103 sammelt, gelangt über die Rohrleitung 111 in den zweiten Gehäuseteil 105 und kann von dort über den Ablasshahn 109 aus dem Getriebe 101 entfernt werden.

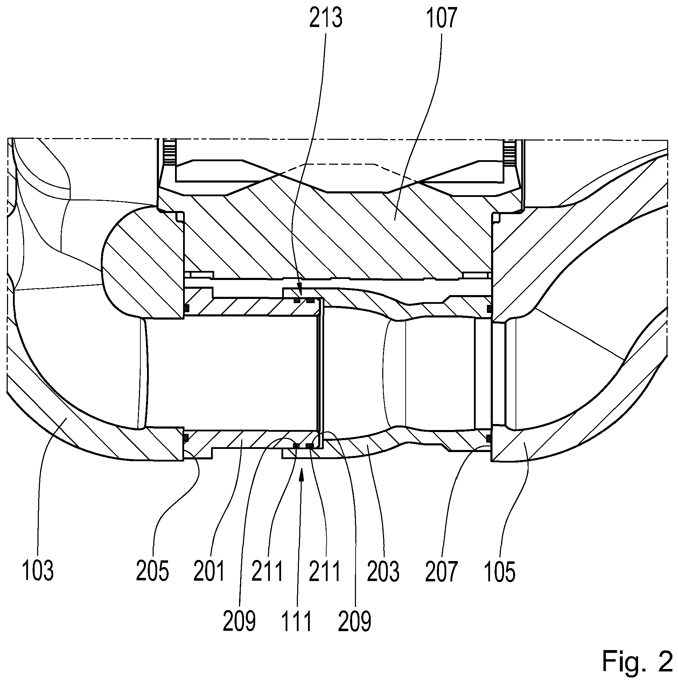

Die in Fig. 1 dargestellte Rohrleitung 111 weist ein aus dem Stand der Technik bekanntes flexibles Teilstück 113 auf. Eine erfindungsgemäße Alternative ist in Fig. 2 dargestellt.

Die Rohrleitung 111 wird gemäß Fig. 2 durch ein erstes Teilstück 201 und ein zweites Teilstück 203 gebildet. Das erste Teilstück 201 ist über eine erste Flanschverbindung 205 mit dem ersten Gehäuseteil 103 verschraubt. Entsprechend ist das zweite Rohrstück 203 über eine zweite Flanschverbindung 207 mit dem zweiten Gehäuseteil 105 verschraubt.

Das erste Teilstück 201 weist zwei Nuten 209 auf, in die jeweils eine Dichtung 211 eingesetzt ist. Die Nuten 209 und die Dichtungen 211 verlaufen rotationssymmetrisch um die Mittelachse herum. Entsprechend ist das erste Teilstück 201 in diesem Bereich rotationssymmetrisch.

Der rotationssymmetrische Bereich des ersten Teilstücks 201 ist mit den Nuten 209 und den Dichtungen 211 in einen zylindrischen Bereich 213 des zweiten Rohrstücks 203 eingesteckt. Der zylindrische Bereich 213 hat die Form einer Mantelfläche eines geraden Kreiszylinders. Die Dichtungen 211 liegen an dem zylindrischen Bereich 213 öldicht an.

Innerhalb des zylindrischen Bereichs 213 sind die Dichtungen 211 entlang der Mittelachse der Rohrleitung 111 verschiebbar. Entsprechend lassen sich das erste Rohrstück 201 und das zweite Rohrstück 203 relativ zueinander verschieben. Die Dichtwirkung der Dichtungen 211 bleibt dabei erhalten. Dadurch lassen sich Maßabweichungen 101 und lastbedingte Verformungen des Getriebegehäuses ausgleichen.

### Bezugszeichen

- 101: Getriebegehäuse
- 103: erster Gehäuseteil
- 105: zweiter Gehäuseteil
- 107: dritter Gehäuseteil
- 109: Ablasshahn
- 111: Rohrleitung
- 113: flexibles Teilstück
- 201: erstes Teilstück
- 203: zweites Teilstück
- 205: erste Flanschverbindung
- 207: zweite Flanschverbindung
- 209: Nut
- 211: Dichtung
- 213: zylindrischer Bereich

## Patentansprüche

1. Getriebe mit einem Getriebegehäuse (101) und einer Rohrleitung (111); wobei
das Getriebegehäuse (101) einen Schmierstoffsumpf ausbildet; wobei
ein erstes Stück (201) und ein zweites Stück (203) der Rohrleitung (111) jeweils in den Schmierstoffsumpf münden; wobei
das erste Stück (201) und das zweite Stück (203) ineinandergesteckt sind; und wobei das erste Stück (201) in ein erstes der Gehäuseteile (103) und das zweite Stück (203) in ein zweites der Gehäuseteile (105) mündet; **dadurch gekennzeichnet, dass** das erste Stück (201) und das zweite Stück (203) entlang einer Mittelachse relativ zueinander verschiebbar sind.

2. Getriebe nach dem vorhergehenden Anspruch; **gekennzeichnet durch** mindestens eine Dichtung (211), die das erste Stück (201) und das zweite Stück (203) fluiddicht gegeneinander abdichtet; wobei
die Dichtung (211) unverschiebbar in dem ersten Stück (201) fixiert ist; wobei
das zweite Stück (203) einen zylindrischen Bereich (213) ausbildet; und wobei
die Dichtung (211) an dem zylindrischen Bereich (213) anliegt.

3. Getriebe nach einem der vorhergehenden Ansprüche; **gekennzeichnet durch** einen dritten Gehäuseteil (107), der die mindestens zwei Gehäuseteile (101, 103) miteinander verbindet.

## Claims

1. Transmission having a transmission housing (101) and having a pipeline (111); wherein
the transmission housing (101) forms a lubricant sump; wherein
a first piece (201) and a second piece (203) of the pipeline (111) each open out into the lubricant sump; wherein
the first piece (201) and the second piece (203) are plugged one into the other; and wherein
the first piece (201) opens out into a first of the housing parts (103) and the second piece (203) opens out into a second of the housing parts (105); **characterized in that** the first piece (201) and the second piece (203) are displaceable relative to one another along a central axis.

2. Transmission according to the preceding claim; **characterized by** at least one seal (211) which seals off the first piece (201) and the second piece (203) in a fluid-tight manner with respect to one another; wherein the seal (211) is fixed in a non-displaceable manner in the first piece (201); wherein
the second piece (203) forms a cylindrical region (213); and wherein
the seal (211) bears against the cylindrical region (213).

3. Transmission according to either of the preceding claims; **characterized by** a third housing part (107) which connects the at least two housing parts (101, 103) to one another.

## Revendications

1. Transmission avec un carter (101) de transmission et une conduite tubulaire (111) ;
le carter (101) de transmission formant un réservoir de lubrifiant,
une première pièce (201) et une seconde pièce (203) de la conduite tubulaire (111) débouchant chacune dans le réservoir de lubrifiant ;
la première pièce (201) et la seconde pièce (203) étant emboîtées l'une dans l'autre ; et
la première pièce (201) débouchant dans une première des parties (103) de carter et la seconde pièce (203) débouchant dans une deuxième (105) des parties de carter ; **caractérisée en ce que** la première pièce (201) et la seconde pièce (203) peuvent être coulissées l'une par rapport à l'autre le long d'un axe central.

2. Transmission selon la revendication précédente ; **caractérisée par** au moins un joint d'étanchéité (211), qui assure l'étanchéité aux fluides entre la première pièce (201) et la seconde pièce (203) ;
le joint d'étanchéité (211) étant fixé sans pouvoir être coulissé dans la première pièce (201) ;
la seconde pièce (203) formant une zone cylindrique (213) ; et
le joint d'étanchéité (211) reposant sur la zone cylindrique (213).

3. Transmission selon l'une des revendications précédentes, **caractérisée par** une troisième partie (107) de carter, qui relie les au moins deux parties (101, 103) de carter l'une à l'autre.
